# EUROPEAN PATENT SPECIFICATION

(11) **EP 4 094 002 B1**
(45) Date of publication and mention of the grant of the patent: **11.09.2024**
(21) Application number: 21768068.5
(22) Date of filing: 03.03.2021
(51) Int. Cl.: F16K 27/02, F16K 11/04, F16K 51/00, F16K 51/02, F16K 11/20, F16K 27/00

(54) **LIMITED VOLUME COAXIAL VALVE BLOCK**
KOAXIALER VENTILBLOCK MIT BEGRENZTEM VOLUMEN
BLOC À VANNES COAXIALES DE VOLUME LIMITÉ

(30) Priority: 09.03.2020 US 202062987128 P; 23.07.2020 US 202063055869 P
(43) Date of publication of application: 30.11.2022
(73) Proprietor: Versum Materials US, LLC, Tempe, AZ 85284 (US)
(72) Inventor: SEIDL, Mason, Tempe, Arizona 85284 (US); FLICKINGER, Meredith, Tempe, Arizona 85284 (US); PILTZ, Tom William, Tempe, Arizona 85284 (US); CABLE, Shawn S., Tempe, Arizona 85284 (US); EBELING, David, Tempe, Arizona 85284 (US); BIRTCHER, Michael, Tempe, Arizona 85284 (US)
(74) Representative: Sommer, Andrea
(86) International application number: PCT/US2021/020729
(87) International publication number: WO 2021/183346

(56) References cited:
- JP-A- 2004 186 337
- JP-A- 2008 057 579
- US-A- 4 714 091
- US-A- 5 794 659
- US-A- 5 868 155
- US-A- 6 035 893
- US-A1- 2013 333 768
- US-A1- 2017 335 987
- US-A1- 2017 335 987

## Description

### BACKGROUND OF THE INVENTION

Various types of chemicals and processes are required in the semiconductor fabrication industry, all while continuous, pure chemical can be supplied at the semiconductor tool request. These requirements necessitate regular and safe chemical container change out processes within the chemical delivery system.

Large piping runs and the presence of deadlegs within the design increase purge time required to safely change these chemical containers while decreasing purging efficiency. Deadlegs refer to sections of chemical delivery system design where purge gas cannot effectively reach, therefore decreasing purging efficiency and safety of the system during chemical container change out and system servicing.

These drawbacks to the chemical delivery system design are amplified by the presence of chemicals with lower vapor pressure and high purity such as tetrakis(dimethylamido)titanium (TDMAT). Chemicals of this kind are historically purged with use of solvent chemical, as disclosed in U.S. Pat. No. 5,964,230 and U.S. Pat. No. 6,138,691. US Patent No. 6,035,893 discloses a valve main body internally formed with a main channel extending from a rear end face thereof nearly to a first valve actuator, and two subchannels communicating with the main channel via a second and third valve actuators, respectively. The valve main body has a slanting face extending forwardly downword and having the first valve actuator. In particular, document US 6,035,893 discloses a valve main body according to the preamble of claim 1.

The use of a low volume block valve, as described below, will have the ability to remove the solvent purge requirement and use high pressure, high velocity purge gas and internal coaxial line instead. The use of vacuum draw and purge gas evacuation is also included in the block valve design. This low volume block valve has virtually eliminated any deadleg within the purgeable piping design, allowing for improved purging efficiency during chemical container changeouts.

### BRIEF SUMMARY OF THE INVENTION

In one aspect, disclosed herein is a valve block comprising: a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a fifth side (140) and a sixth side (142) opposite the fifth side (140), wherein the second portion (152) of the second conduit (148) is in fluid communication with an opening (166) located on the fifth side (140) of the housing (114) through a conduit via a bend portion (162); and an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) located on said angled seventh side (158) and a second opening (176) located on said angled seventh side (158) in the surface (184), each of which are terminal ends of conduits, wherein the first opening (174) located on said angled seventh side (158) is in fluid communication with an opening (208) through conduit portion (194) via bend (196) located on the fifth side (140) of the housing (114), the second opening (176) located on said angled seventh side (158) is in fluid communication with the opening (206) located on the second side (126) of the housing (114) through conduit (186) via bend (190) and conduit portion (188).

In another aspect, disclosed herein is a system comprising: a valve block comprising: a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a first valve control mechanism located the cylindrical depression (118) of the first side (116); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a second valve control mechanism located the cylindrical depression (130) of the third side (128); a fifth side (140) and a sixth side (142) opposite the fifth side (140), wherein the first portion (150) of the second conduit (148) is in fluid communication with an opening (166) located on the fifth side (140) of the housing (114) via a bend portion (162); an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) located on said angled seventh side (158) and a second opening (176) located on said angled seventh side (158) in the surface (184), each of which are terminal ends of conduits, wherein the first opening (174) located on said angled seventh side (158) is in fluid communication with an opening (208) through conduit portion (194) via bend (196) located on the fifth side (140) of the housing (114), the second opening (176) located on said angled seventh side (158) is in fluid communication with the opening (206) located on the second side (126) of the housing (114) through conduit (186) via bend (190) and conduit portion (188); and a third valve control mechanism located the cylindrical depression (154) of the angled seventh side (158).

In yet another aspect, disclosed herein is a method of performing a purge step in a valve block after the valve block has undergone a fluid flow step, wherein the valve block is in fluid communication with a container, the valve block comprising: a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a first valve control mechanism located the cylindrical depression (118) of the first side (116); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a second valve control mechanism located the cylindrical depression (130) of the third side (128); a fifth side (140) and a sixth side (142) opposite the fifth side (140), wherein the first portion (150) of the second conduit (148) is in fluid communication with an opening (166) located on the fifth side (140) of the housing (114) via a bend portion (162); an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) located on said angled seventh side (158) and a second opening (176) located on said angled seventh side (158) in the surface (184), each of which are terminal ends of conduits, wherein the first opening (174) located on said angled seventh side (158) is in fluid communication with an opening (208) through conduit portion (194) via bend (196) located on the fifth side (140) of the housing (114), the second opening (176) located on said angled seventh side (158) is in fluid communication with the opening (206) located on the second side (126) of the housing (114) through conduit (186) via bend (190) and conduit portion (188), wherein the opening (206) located on the second side (126) of the housing (114) is in fluid communication with a purge gas source (159); and a third valve control mechanism located the cylindrical depression (154) of the angled seventh side (158); the method comprising the steps of: changing the container; engaging the second valve control mechanism to close the first opening (134) in the surface (132) of the cylindrical depression (130) in the third side (128) and to isolate the second opening (136) in the surface (132) of the cylindrical depression (130) in the third side (128); disengaging the first valve control mechanism to open the first opening (122) in the surface (120) of the cylindrical depression (118) in the first side (116) and to open the second opening (124) in the surface (120) of the cylindrical depression (118) in the first side (116); disengaging the third valve control mechanism to open the first opening (174) located on said angled seventh side (158) in the surface (184) of the cylindrical depression (154) in the angled seventh side (158) and to open the second opening (176) located on said angled seventh side (158) in the surface (184) of the cylindrical depression (154) in the angled seventh side (158); and flowing high pressure purge gas through the opening (206) located on the second side (126) of the housing (114) such that the purge gas flows through the second opening (176) located on said angled seventh side (158) in the surface (184) of the cylindrical depression (154) in the angled seventh side (158) then through the first opening (174) located on said angled seventh side (158) in the surface (184) of the cylindrical depression (154) in the angled seventh side (158) to exit the inner coaxial portion (183) of the coaxial conduit and back up the outer coaxial portion (185) of the coaxial conduit through the first opening (122) in the surface (120) of the cylindrical depression (118) in the first side (116) and into the second opening (124) in the surface (120) of the cylindrical depression (118) in the first side (116) to the vent opening (178) located on the second side (126) of the housing (114).

The embodiments of the invention can be used alone or in combinations with each other.

### BRIEF DESCRIPTION OF SEVERAL VIEWS OF THE DRAWINGS

FIG. 1 illustrates a prior art solvent purge system comprising a solvent purge manifold to host container manifold system comprising two independent valves and a coax injector connection;
FIG. 2 illustrates a prior art high-pressure purge manifold to host container manifold system comprising two independent valves consisting of three independent valve control mechanisms and a coax injector connection;
FIG. 3 illustrates yet another prior art system comprising a valve block with dual valve control mechanisms;
FIG. 4 illustrates a valve block of the present invention;
FIG. 5 is an axial view of the valve block of FIG. 4;
FIG. 6 is a view of the valve block of FIG. 5 cut along line A-A;
FIG. 7 is a view of the valve block of FIG. 6 cut along line B-B;
FIG. 8 is another view of the valve block of FIG. 4;
FIG. 9 is a view of the valve block of FIG. 8 cut along line C-C;
FIG. 10 is a view of the valve block of FIG. 8 cut along line D-D; and

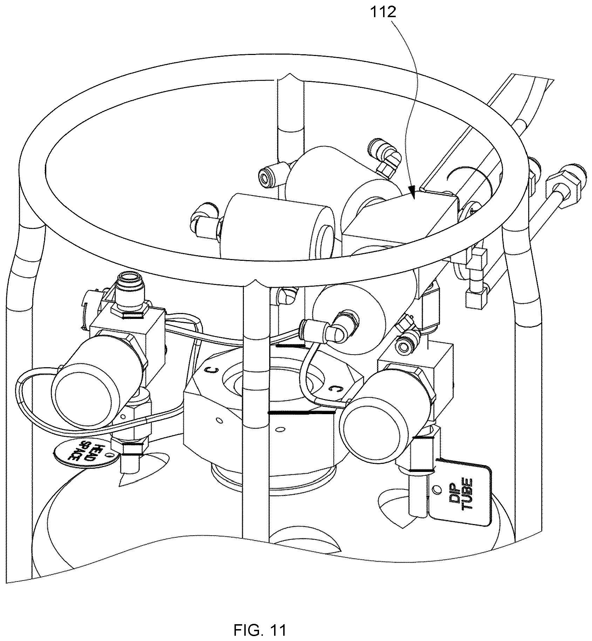

FIG. 11 is an illustration of the valve block of the present invention in relation to its installation point on the container, underneath a chimering.

### DETAILED DESCRIPTION OF THE INVENTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention. Various changes may be made in the function and arrangement of elements without departing from the spirit and scope of the invention, as set forth in the appended claims.

For purposes of the present specification and accompanying claims, the term "high velocity purge" means a purge step using a purge gas that is delivered at a rate of 100 liters per minute or greater.

For purposes of the present specification and accompanying claims, the term "conduit" refers to one or more structures through which fluids can be transported between two or more components of a system. For example, conduits can include pipes, ducts, manifolds, and combinations thereof that transport liquids and/or gases at varying pressures throughout a system.

For purposes of the present specification and accompanying claims, the term "fluid flow communication" refers to the nature of connectivity between two or more components that enables liquids and/or gases to be transported between the components in a controlled fashion. Coupling two or more components such that they are in fluid flow communication with each other can involve any suitable method known in the art, such as with the use of flanged conduits, gaskets, and/or bolts.

For purposes of the present specification and accompanying claims, the term "coax" or "coaxial" refers to an arrangement of tubing where there is an inner tube located inside of an outer tube in concentric fashion.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted.. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. The use of the term "comprising" in the specification and the claims includes the more narrow language of "consisting essentially of" and "consisting of."

Embodiments are described herein, including the best mode known to the inventors for carrying out the invention. Variations of those embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

As used herein, "about" is intended to correspond to ±5% of the stated value.

Disclosed herein is an improved valve block design and system therefor that can be used to improve the purging efficiency for drying all wetted surfaces that are connected between either a chemical container and a manifold or between a pair of manifolds. The improved valve block design includes several features that can be used to significantly reduce the time required to purge all wetted surfaces within a system. The valve block design eliminates or introduces only minimal deadlegs and provides for full impingement on any minimal deadlegs. It also allows for a substantial reduction in the length of the vent path, and therefore a substantial reduction in the total quantity of surface area of conduit that becomes wetted with liquid chemical.

The valve block disclosed herein comprises a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a fifth side (140) and a sixth side (142) opposite the fifth side (140), wherein the second portion (152) of the second conduit (148) is in fluid communication with an opening (166) located on the fifth side (140) of the housing (114) through a conduit via a bend portion (162); and an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) located on said angled seventh side (158) and a second opening (176) located on said angled seventh side (158) in the surface (184), each of which are terminal ends of conduits wherein the first opening (174) located on said angled seventh side (158) is in fluid communication with an opening (208) through conduit portion (194) via bend (196) located on the fifth side (140) of the housing (114), the second opening (176) located on said angled seventh side (158) is in fluid communication with the opening (206) located on the second side (126) of the housing (114) through conduit (186) via bend (190) and conduit portion (188).

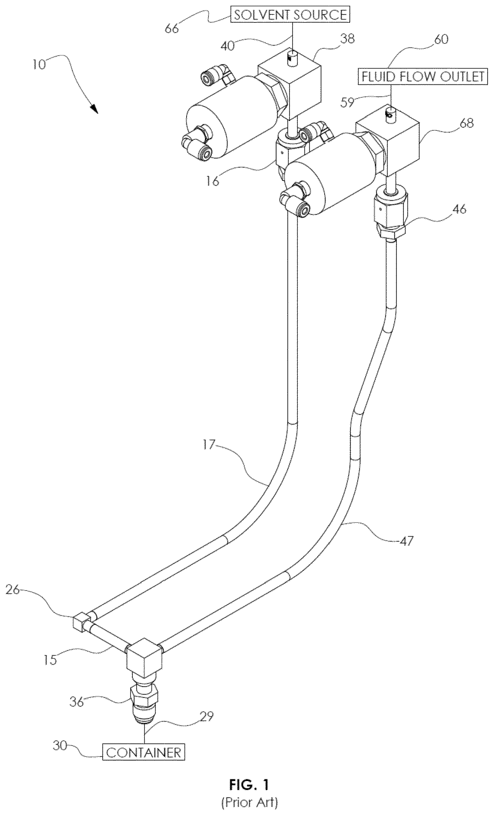

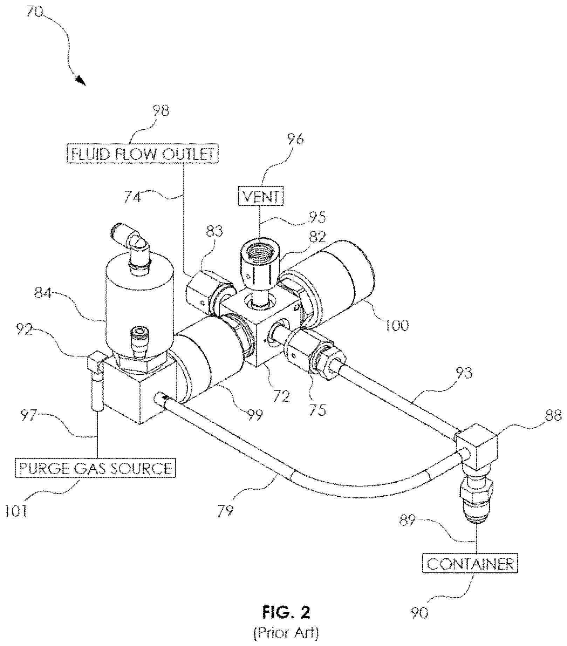

The valve block according to embodiments disclosed herein accomplishes these improvements by having a triad of valves located within a single valve block or housing, two of the valve seats being oriented at a 90 degree difference relative to each other (e.g., on adjacent surfaces of a housing that is in the shape of a rectangular prism) while the third is located independently on another side. When used in a system in which the valve block is connected to a host container, the presence of the triad of valves ensures that all deadlegs are fully impinged upon during a purge step, thereby permitting a more efficient purge process. Specifically, the conduit through which purge gas enters the system is coaxially aligned with the port opening that is in fluid flow communication with the container. Because this port opening is closed during the purge process, the minimal deadleg located coaxially to this port opening is fully impinged upon by the purge gas when said port opening is closed. Accordingly, less purge gas can be used, the purge process can occur more quickly, and energy savings can be realized. This is contrasted with known prior art systems (see FIGS. 1 and 2), in which the valve seats are further from the container opening. In addition, locating the valves in a single valve block allows the liquid (vent) path to be kept very short, thereby greatly reducing the quantity of conduit surface area that becomes wetted and therefore must be dried. This is contrasted with a known prior art system (see FIG. 2), which has a comparably much longer liquid (vent) path that must be dried.

Fig. **1** is a visual representation of a prior art system **10** comprising a solvent source **66** in fluid flow communication with a conduit **40** which is in fluid flow communication with valve **38.** Valve **38** is in fluid flow communication with conduit **17** via connection **16** which is in fluid flow communication with conduit **15** via bend **26.** Conduit **15** is in fluid flow communication with the internal coaxial portion of coax injector **36** and in fluid flow communication with container **30** via conduit **29.**

A fluid flow outlet **60** in fluid flow communication with a conduit **59** which is in fluid flow communication with valve **68.** Valve **68** is in fluid flow communication with conduit **47** via connection **46.** Conduit **47** is in fluid flow communication with the external coaxial portion of coax injector **36** and in fluid flow communication with container **30** via conduit **29.**

Fig. **2** is a visual representation of a prior art system **70** comprising a purge source **101** in fluid flow communication with a conduit **97** which is in fluid flow communication with valve **84** via bend **92.** Valve **84** is in fluid flow communication with conduit **79** and is in fluid flow communication with the internal coaxial portion of coax injector **88** and in fluid flow communication with container **90** via conduit **89.**

A fluid flow outlet **98** in fluid flow communication with a conduit **74** which is in fluid flow communication with valve **72** via connection **83.** Valve **72** is dual actuated to control individual ports connections **82, 83** via actuators **99, 100.** During this operation, actuator **99** is open and **100** is closed to allow fluid flow communication to connection **75** and is in fluid flow communication with conduit **93.** Conduit **93** is in fluid flow communication with the external coaxial portion of coax injector **88** and in fluid flow communication with container **90** via conduit **89.**

A vent **96** in fluid flow communication with a conduit **95** which is in fluid flow communication with valve **72** via connection **82.** Valve **72** is dual actuated to control individual ports connections **82, 83** via actuators **99, 100.** During this operation, actuator **100** is open and **99** is closed to allow fluid flow communication to connection **75** and is in fluid flow communication with conduit **93.** Conduit **93** is in fluid flow communication with the external coaxial portion of coax injector **88** and in fluid flow communication with container **90** via conduit **89.**

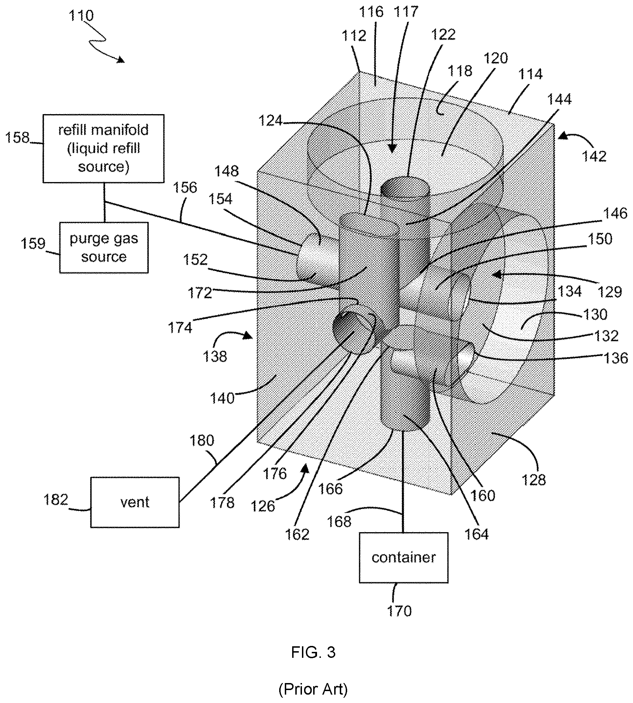

The valve block shown in prior art FIG. **3** is disclosed in U.S. Patent No. 10,663,072. The valve block shown in prior art FIG. **3** is a refill manifold to host container manifold system **110** comprising an improved valve block **112** according to the present invention will now be described in detail.

The valve block **112** according to the present invention comprises a housing **114** that is approximately a rectangular prism in shape, although other housing shapes are possible within the scope of this invention, including generally cubic, spherical, or ovoid shapes or irregular shapes. In this embodiment, the housing **114** comprises a first side **116** that includes a valve seat **117** comprising a cylindrical depression **118.** The cylindrical depression **118** comprises a surface **120** at which openings **122,124** terminate and a second side **126** that opposes the first side **116.** The cylindrical depression **118** accommodates the placement of a valve control mechanism therein (not shown). The valve control mechanism allows for selective opening and closing of the opening **122** via a diaphragm that is fully engageable with the opening **122.**

The opening **122** is connected in fluid flow communication to a conduit portion **144,** which is connected in fluid flow communication to a T-connection **146.** The T-connection **146** is also connected in fluid flow communication with a conduit portion **148** that comprises a first portion **150** and a second portion **152.** The valve block **112** further comprises a third side **128** that includes a valve seat **129** comprising a cylindrical depression **130.** The cylindrical depression **130** comprises a surface **132** at which openings **134,136** terminate, a fourth side **138** that opposes the third side **128,** a fifth side **140,** and a sixth side **142** that opposes the fifth side **140.** The cylindrical depression **130** accommodates the placement of a second valve control mechanism therein (not shown). The second valve control mechanism is used to selectively open and close the opening **134** via a diaphragm that is fully engageable with the opening **134.** Opening **134** is in fluid flow communication with the first portion **150** of the conduit portion **148** and opening **136** is in fluid flow communication with conduit portion **160.** In this embodiment, the cylindrical depressions **118,130** of the valve seats **117,129** that accommodate attachment of the valve control mechanisms are located on adjacent sides of the housing **114** (i.e., first side **116** and third side **128),** the openings **134,154** are axially aligned, i.e., the center points of the openings **134,154** are aligned along the same linear axis (via a line that could be drawn through the center of the volume of conduit portion 148).

The second portion **152** of the conduit portion **148** is in fluid flow communication with an opening **154** located on the fourth side **138** of the valve block **112,** and the opening **154** is in fluid flow communication with both a refill manifold **158** and a purge gas source **159** via connection **156.** Conduit portion **160** is in fluid flow communication with conduit portion **164** via bend **162,** and conduit portion **164** is in fluid flow communication with opening **166** located on the second side **126** of the housing **114.** Opening **166** is in fluid flow communication with container **170** via connection **168.** Opening **124** located on surface **120** of cylindrical depression **118** is in fluid flow communication with conduit portion **172,** which is in fluid flow communication with conduit portion **176** via bend **174.** Conduit portion **176** is in fluid flow communication with opening **178** located on fifth side **140** of the housing **114** and opening **178** is in fluid flow communication with vent **182** via connection **180.** In this embodiment, T-connection **146** and bends **162,174** orient respective connected conduit portions at 90 degree angles. It should be understood that in alternate embodiments, the T-connection **146** and/or bends **162,174** need not orient respective connected conduit portions at **90** degree angles but could instead orient respective connected conduit portions at any angle from 30 to 135 degrees.

The valve block disclosed in U.S. Patent No. 10,663,072, however, still suffers from the drawback of only being move liquids or gas through three ports controlled by two actuators. While the current invention can move liquids or gas through four ports controlled by three individual actuators. In addition to the advanced port control, the present invention can feed purge gas directly in the container connection, the fluid flow path, and the vent due to the use of a coaxial tube within the valve block. The smaller tube inside of the coax portion of the valve concentrates the pressure of the purge gas to higher pressures which allows for quicker purging of the valve block. The present disclosure builds on that disclosed in U.S. Patent No. 10,663,072.

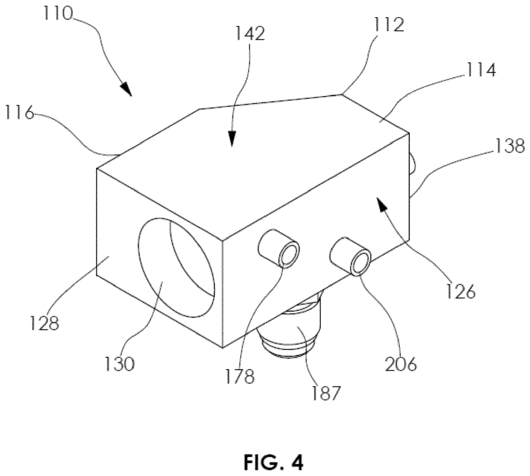

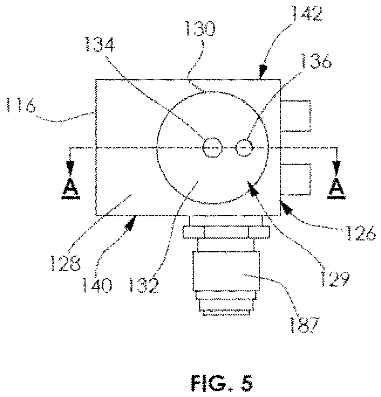

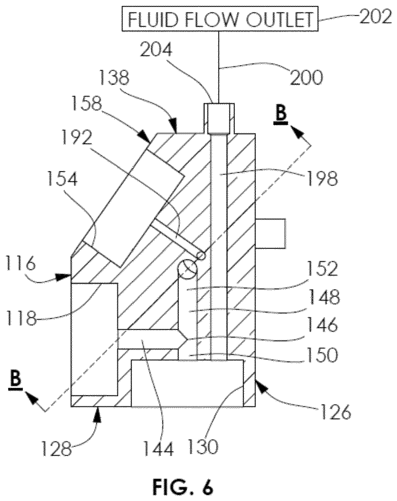

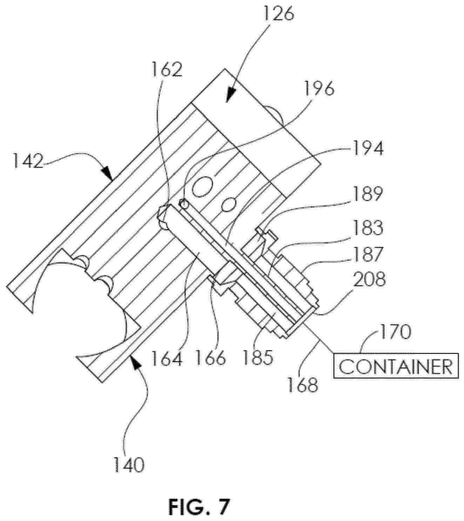

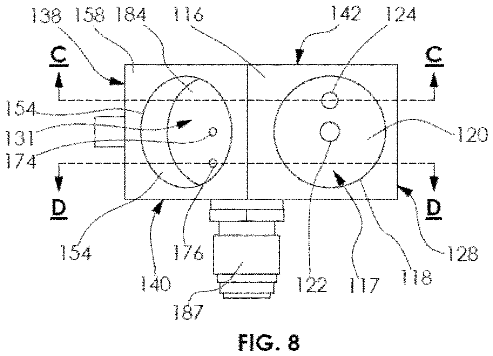

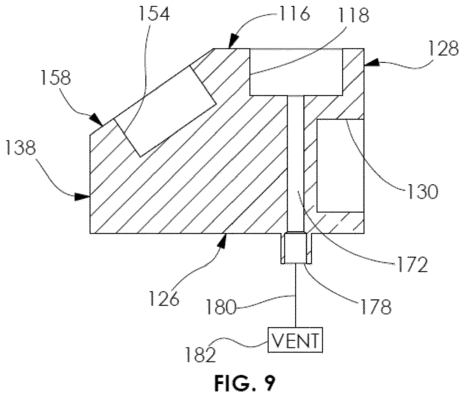

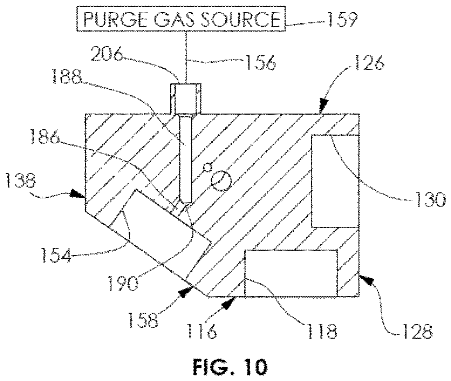

Referring now to FIGS. 4 to 10, a purge manifold to host container manifold system **110** comprising an improved valve block **112** according to the present invention will now be described in detail.

The valve block **112** according to the present invention comprises a housing **114** that is a multi-sided object, although other housing shapes are possible within the scope of this invention, including generally cubic, spherical, rectangular, ovoid shapes or other irregular shapes. In this embodiment, the housing **114** comprises a first side **116** that includes a valve seat **117** comprising a cylindrical depression **118.** The cylindrical depression **118** comprises a surface **120** at which openings **122, 124** terminate and a second side **126** that opposes the first side **116.** The cylindrical depression **118** accommodates the placement of a valve control mechanism therein (not shown). The valve control mechanism allows for selective opening and closing of the opening **122** via a diaphragm this is fully engageable with the opening **122.**

The opening **122** is connected in fluid flow communication to a conduit portion **144,** which is connected in fluid flow communication to at T-connection **146.** The T-connection **146** is also connected in fluid flow communication with a conduit portion **148** that comprises a first portion **150** and a second portion **152.** The valve block **112** further comprises a third side **128** that includes a valve seat **129** comprising a cylindrical depression **130.** The cylindrical depression **130** comprises a surface **132** at which openings **134, 136** terminate, a fourth side **138** that opposes the third side **128,** a fifth side **140,** and sixth side **142** that opposes the fifth side **140.** The cylindrical depression **130** accommodates the placement of the second valve control mechanism therein (not shown). The second valve control mechanism is used to selectively open and close the opening **134** with, for example, a diaphragm. Opening **134** is in fluid flow communication with the first portion **150** of the conduit portion **148** and opening **136** is in fluid flow communication with conduit portion **198.** Conduit portion **198** is in fluid flow communication with opening **204** located on the fourth side **138** of the housing **114** and opening **204** is in fluid flow communication with fluid flow outlet **202** via connection **200.** In this embodiment, the cylindrical depressions **118, 130** of the valve seats **117, 129** that accommodate attachment of the valve control mechanisms are located on adjacent (i.e., first side **116** and third side **128),** instead of opposing sides of the housing of the valve block as shown in the prior art embodiments on FIG. **2****.**

Conduit portion **148** is in fluid flow communication with conduit portion **164** via bend **162,** and conduit portion **164** is in fluid flow communication with opening **166** located on the fifth side **140** of the housing **114.** Opening **166** is in fluid flow communication with a face seal fitting **187** via a reducing conduit **189** and is in fluid flow communication with coaxial conduit portion **185** which is in fluid flow communication with opening **208.** Opening **208** is in fluid flow communication with container **170** via connection **168.** Opening **124** located on surface **120** of cylindrical depression **118** is in fluid flow communication with conduit portion **172.** Conduit portion **172** is in fluid flow communication with opening **178** located on the second side **126** of the housing **114** and opening **178** is in fluid flow communication with vent **182** via connection **180.**

Additionally, the valve block **112** comprises of an angled seventh side **158** that includes a valve seat **131** comprising a cylindrical depression **154.** The cylindrical depression **154** comprises a surface **184** at which openings **174, 176** terminate, the second side **126** that opposes the first side **116.** The cylindrical depression **154** accommodates the placement of the third valve control mechanism therein (not shown). The third valve control mechanism is used to selectively open and close the opening **174.** Opening **174** is in fluid flow communication with the conduit portion **192.** Conduit portion **192** is in fluid flow communication with conduit portion **194** via bend **196.** Conduit portion **194** is in fluid flow communication with outer coaxial conduit portion **185** (outer portion) and conduit portion **168** to the container **170** via the inner coaxial portion **183** (inner portion) located inside the face seal fitting 187.and opening **176** is in fluid flow communication with conduit portion **186.** Conduit portion **186** is in fluid flow communication with conduit portion **188** via bend **190,** and conduit portion **188** is in fluid flow communication with opening **206** located on the second side **126** of the housing **114** and is in fluid flow communication with a purge gas source **159** via connection **156.**

In the system **110** of FIGS. 4 to 10 during normal fluid flow operation, valve control mechanism (not shown) in cylindrical depression **130** is open. This allows fluid to flow from container **170** through conduit **168** and through opening **208** into conduit **185.** Conduit **185** is the outer coaxial portion of face seal **187,** which allows fluid to flow through opening **166** and into conduits **164** and **148.** With the valve control mechanism open (not shown) fluid can flow through opening **134** and into opening **136** so it can make its way out of opening **204** to fluid flow outlet **202**via conduit **198** and **200.**

When container **170** is empty and needs to be changed. The valve control mechanism (not shown) in cylindrical depression **130** (third side) is closed. This closes opening **134** and isolates the wetted system from the area that is intended to be purged. Valve control mechanisms (not shown) in cylindrical depressions **154** and **118** both open to allow the purge cycle to begin. Purge gas source **159** feeds purge gas through opening **206** via conduit **156** and through conduits **188** and **186.** With the valve control mechanism open (not shown) fluid can flow through opening **174** and into opening **176** so it travel through conduit **192** and **196** to exit the inner coaxial portion **183.** The valve control mechanism (not shown) on the container will be closed and this purge step forces high pressure purge gas to blast fluid molecules off the connection of opening **208** and forces and back up the outer coaxial conduit **185.** Conduit **185** is the outer coaxial portion of face seal **187,** which allows purge gas and fluid particles to flow through opening **166** and into conduits **164** and **148.** With the valve control mechanism of cylindrical depression **118** open (not shown) purge gas and fluid particles can flow through opening **122** and into opening **124** so it can make its way out of opening **178** to vent **182** via conduit **172** and **180.**

Thus, disclosed herein is a system comprising: a valve block comprising: a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a first valve control mechanism located the cylindrical depression (118) of the first side (116); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a second valve control mechanism located the cylindrical depression (130) of the third side (128); a fifth side (140) and a sixth side (142) opposite the fifth side (140), wherein the first portion (150) of the second conduit (148) is in fluid communication with an opening (166) located on the fifth side (140) of the housing (114) via a bend portion (162); an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) and a second opening (176) in the surface (184), each of which are terminal ends of conduits, wherein the first opening (174) is in fluid communication with an opening (208) through conduit portion (194) via bend (196) located on the fifth side (140) of the housing (114), the second opening (176) is in fluid communication with the opening (206) located on the second side (126) of the housing (114) through conduit (186) via bend (190) and conduit portion (188); and a third valve control mechanism located the cylindrical depression (154) of the angled seventh side (158).

Thus, also disclosed herein is a method of performing a purge step in a valve block after the valve block has undergone a fluid flow step, wherein the valve block is in fluid communication with a container, the valve block comprising: a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114); a first valve control mechanism located the cylindrical depression (118) of the first side (116); a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114); a second valve control mechanism located the cylindrical depression (130) of the third side (128); a fifth side (140) and a sixth side (142) opposite the fifth side (140), wherein the first portion (150) of the second conduit (148) is in fluid communication with an opening (166) located on the fifth side (140) of the housing (114) via a bend portion (162); an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) and a second opening (176) in the surface (184), each of which are terminal ends of conduits, wherein the first opening (174) is in fluid communication with an opening (208) through conduit portion (194) via bend (196) located on the fifth side (140) of the housing (114), the second opening (176) is in fluid communication with the opening (206) located on the second side (126) of the housing (114) through conduit (186) via bend (190) and conduit portion (188), wherein the opening (206) located on the second side (126) of the housing (114) is in fluid communication with a purge gas source (159); and a third valve control mechanism located the cylindrical depression (154) of the angled seventh side (158); the method comprising the steps of: changing the container; engaging the second valve control mechanism to close the first opening (134) in the surface (132) of the cylindrical depression (130) in the third side (128) and to isolate the second opening (136) in the surface (132) of the cylindrical depression (130) in the third side (128); disengaging the first valve control mechanism to open the first opening (122) in the surface (120) of the cylindrical depression (118) in the first side (116) and to open the second opening (124) in the surface (120) of the cylindrical depression (118) in the first side (116); disengaging the third valve control mechanism to open the first opening (174) in the surface (184) of the cylindrical depression (154) in the angled seventh side (158) and to open the second opening (176) in the surface (184) of the cylindrical depression (154) in the angled seventh side (158); and flowing high pressure purge gas through the opening (206) located on the second side (126) of the housing (114) such that the purge gas flows through the second opening (176) in the surface (184) of the cylindrical depression (154) in the angled seventh side (158) then through the first opening (174) in the surface (184) of the cylindrical depression (154) in the angled seventh side (158) to exit the inner coaxial portion (183) of the coaxial conduit and back up the outer coaxial portion (185) of the coaxial conduit through the first opening (122) in the surface (120) of the cylindrical depression (118) in the first side (116) and into the second opening (124) in the surface (120) of the cylindrical depression (118) in the first side (116) to the vent opening (178) located on the second side (126) of the housing (114).

Unlike prior art system **10** shown in FIG. **1****,** when the system **110** of FIG. 4 needs to change the container, it does not need to use a dangerous solvent source. The use of high-pressure purge gas is to accomplish the same task reduces the change of hazardous chemical exposure in the system and reduces the waste stream of disposing of hazardous chemicals.

Also, unlike prior art system **70** shown in FIG. 2, system **110** of FIGS. 4 to 10 does not require the additional conduit, valves and a separate coaxial injector. System **110** of FIGS. 4 to 10 takes all these separate components and combines them into one small valve block. The advantage of this being a greatly reduced amount of wetted surfaces inside the valve block. This significantly decreases purge times and increases the rate at which a container can be changed.

Additionally, unlike prior art system **110** shown in FIG. 3, when system **110** of FIGS. 4 to 10 performs a container change, the coaxial injector portion **187** can blast the connection between the valve block **112** and the container **170** with high pressure purge gas. This allows the same valve to vent the gas in the same step, as well as, deliver fluid in another step once the can change is complete. This is completed by incorporating three separate valve control mechanisms (not shown) into a single valve block while also taking advantage of a coaxial high-pressure purge device.

## Claims

1. A valve block comprising:
a housing (114) having a first side (116) and a second side (126) opposite the first side (116), wherein the first side (116) comprises a cylindrical depression (118) for receiving a valve control mechanism, wherein the cylindrical depression (118) comprises a surface (120) and a first opening (122) and a second opening (124) in the surface (120), each of which are terminal ends of conduits, wherein the first opening is in fluid communication with a T-connection (146) in fluid communication with a second conduit (148) having a first portion (150) and a second portion (152), wherein the second opening (124) is in fluid communication with a vent opening (178) located on the second side (126) of the housing (114);
a third side (128) adjacent to the first side (116) and a fourth side (138) opposite the third side (128), wherein the third side (128) comprises a cylindrical depression (130) for receiving a valve control mechanism, wherein the cylindrical depression (130) comprises a surface (132) and a first opening (134) and a second opening (136) in the surface, each of which are terminal ends of conduits, wherein the first opening (134) is in fluid communication with the first portion (150) of the second conduit (148) and the second opening (136) is in fluid communication with an opening (204) located on the fourth side (138) of the housing (114);
a fifth side (140) and a sixth side (142) opposite the fifth side (140), wherein the second portion (152) of the second conduit (148) is in fluid communication with an opening (166) located on the fifth side (140) of the housing (114) through a conduit via a bend portion (162); and
an angled seventh side (158) adjacent to the first side (116) and the fourth side (138), wherein the angled seventh side (158) comprises a cylindrical depression (154) for receiving a valve control mechanism, wherein the cylindrical depression (154) comprises a surface (184) and a first opening (174) and a second opening (176) in the surface (184), each of which are terminal ends of conduits,
**characterized in that**
said first opening (174) located on the angled seventh side (158) is in fluid communication with an opening (208) through a conduit portion (194) via a bend (196) located on the fifth side (140) of the housing (114), said second opening (176) located on the angled seventh side (158) is in fluid communication with an the opening (206) located on the second side (126) of the housing (114) through a conduit (186) via a bend (190) and a conduit portion (188)

2. A system comprising:
a valve block according to claim 1 further comprising:
a first valve control mechanism located the cylindrical depression (118) of the first side (116);
a second valve control mechanism located the cylindrical depression (130) of the third side (128); and
a third valve control mechanism located the cylindrical depression (154) of the angled seventh side (158).

3. The valve block of claim 1 or the system of claim 2 wherein the opening (204) in the fourth side (138) of the housing (114) is in fluid communication with a fluid flow outlet (202) via a connection (200).

4. The valve block or the system of claim 3 wherein the opening (166) on the fifth side (140) is in fluid communication with a face seal fitting (187) via a reducing conduit (189) and is in fluid communication with the coaxial conduit (185), which is in fluid communication with the opening (208) located on the fifth side (140) of the housing (114).

5. The valve block or the system of claim 4 wherein the opening (208) located on the fifth side (140) of the housing (114) is in fluid communication with a container (170) via a connection (168).

6. The valve block of claim 1 or the system of claim 2 & wherein the opening (206) located on the second side (126) of the housing (114) is in fluid communication with a purge gas source (159).

7. The valve block of claim 1 or the system of claim 2 wherein the T-connection comprises a 90° angle.

8. The valve block of claim 1 or the system of claim 2 wherein the T-connection comprises an angle from 30° to 135°.

9. A method of performing a purge step in a valve block of claim 2, after the valve block has undergone a fluid flow step, wherein the valve block is in fluid communication with a container, wherein the opening (206) located on the second side (126) of the housing (114) is in fluid communication with a purge gas source (159); and the method comprising the steps of:
changing the container;
engaging the second valve control mechanism to close the first opening (134) in the surface (132) of the cylindrical depression (130) in the third side (128) and to isolate the second opening (136) in the surface (132) of the cylindrical depression (130) in the third side (128);
disengaging the first valve control mechanism to open the first opening (122) in the surface (120) of the cylindrical depression (118) in the first side (116) and to open the second opening (124) in the surface (120) of the cylindrical depression (118) in the first side (116);
disengaging the third valve control mechanism to open the first opening (174) in the surface (184) of the cylindrical depression (154) in the angled seventh side (158) and to open the second opening (176) in the surface (184) of the cylindrical depression (154) in the angled seventh side (158); and
flowing high pressure purge gas through the opening (206) located on the second side (126) of the housing (114) such that the purge gas flows through the second opening (176) in the surface (184) of the cylindrical depression (154) in the angled seventh side (158) then through the first opening (174) in the surface (184) of the cylindrical depression (154) in the angled seventh side (158) to exit the inner coaxial portion (183) of the coaxial conduit and back up the outer coaxial portion (185) of the coaxial conduit through the first opening (122) in the surface (120) of the cylindrical depression (118) in the first side (116) and into the second opening (124) in the surface (120) of the cylindrical depression (118) in the first side (116) to the vent opening (178) located on the second side (126) of the housing (114).

10. The method of claim 9 wherein the opening (204) in the fourth side (138) of the housing (114) is in fluid communication with a fluid flow outlet (202) via a connection (200).

11. The method of claim 10 wherein the opening (166) on the fifth side (140) is in fluid communication with a face seal fitting (187) via a reducing conduit (189) and is in fluid communication with the coaxial conduit (185), which is in fluid communication with the opening (208) located on the fifth side (140) of the housing (114).

12. The method of claim 11 wherein the opening (208) located on the fifth side (140) of the housing (114) is in fluid communication with a container (170) via a connection (168).

13. The method of claim 9 wherein the opening (206) located on the second side (126) of the housing (114) is in fluid communication with a purge gas source (159).

14. The method of claim 9 wherein the T-connection comprises a 90° angle.

15. The method of claim 9 wherein the T-connection comprises an angle from 30° to 135°.

## Patentansprüche

1. Ein Ventilblock umfassend:
ein Gehäuse (114) mit einer ersten Seite (116) und einer zweiten Seite (126) gegenüber der ersten Seite (116), wobei die erste Seite (116) eine zylindrische Vertiefung (118) zur Aufnahme eines Ventilsteuermechanismus aufweist, wobei die zylindrische Vertiefung (118) eine Oberfläche (120) und eine erste Öffnung (122) und eine zweite Öffnung (124) in der Oberfläche (120) aufweist, die jeweils Anschlussenden von Leitungen sind, wobei die erste Öffnung in Fluidverbindung mit einer T-Verbindung (146) steht, die in Fluidverbindung mit einer zweiten Leitung (148) steht, die einen ersten Abschnitt (150) und einen zweiten Abschnitt (152) aufweist, wobei die zweite Öffnung (124) in Fluidverbindung mit einer Entlüftungsöffnung (178) steht, die an der zweiten Seite (126) des Gehäuses (114) angeordnet ist;
eine dritte Seite (128), die an die erste Seite (116) angrenzt, und eine vierte Seite (138), die der dritten Seite (128) gegenüberliegt, wobei die dritte Seite (128) eine zylindrische Vertiefung (130) zur Aufnahme eines Ventilsteuermechanismus aufweist, wobei die zylindrische Vertiefung (130) eine Oberfläche (132) und eine erste Öffnung (134) und eine zweite Öffnung (136) in der Oberfläche aufweist, die jeweils Anschlussenden von Leitungen sind, wobei die erste Öffnung (134) in Fluidverbindung mit dem ersten Abschnitt (150) der zweiten Leitung (148) steht und die zweite Öffnung (136) in Fluidverbindung mit einer Öffnung (204) steht, die an der vierten Seite (138) des Gehäuses (114) angeordnet ist;
eine fünfte Seite (140) und eine sechste Seite (142), die der fünften Seite (140) gegenüberliegt, wobei der zweite Abschnitt (152) der zweiten Leitung (148) mit einer Öffnung (166), die sich an der fünften Seite (140) des Gehäuses (114) befindet, durch eine Leitung über einen gebogenen Abschnitt (162) in Fluidverbindung steht; und
eine abgewinkelte siebte Seite (158), die an die erste Seite (116) und die vierte Seite (138) angrenzt, wobei die abgewinkelte siebte Seite (158) eine zylindrische Vertiefung (154) zur Aufnahme eines Ventilsteuermechanismus umfasst, wobei die zylindrische Vertiefung (154) eine Oberfläche (184) und eine erste Öffnung (174) und eine zweite Öffnung (176) in der Oberfläche (184) umfasst, die jeweils Anschlussenden von Leitungen sind,
**dadurch gekennzeichnet, dass**
besagte erste Öffnung (174), die sich an der abgewinkelten siebten Seite (158) befindet, in Fluidverbindung mit einer Öffnung (208) steht,
durch einen Leitungsabschnitt (194) über eine Biegung (196), die sich auf der fünften Seite (140) des Gehäuses (114) angeordnet ist, besagte zweite Öffnung (176), die an der abgewinkelten siebten Seite (158) angeordnet ist,
in Fluidverbindung mit einer Öffnung (206) steht, die sich auf der zweiten Seite (126) des Gehäuses (114) befindet, durch eine Leitung (186) über eine Biegung (190) und einen Leitungsabschnitt (188).

2. Ein System, umfassend:
einen Ventilblock nach Anspruch 1, ferner umfassend:
einen ersten Ventilsteuermechanismus, der in der zylindrischen Vertiefung (118) der ersten Seite (116) angeordnet ist;
einen zweiten Ventilsteuermechanismus, der in der zylindrischen Vertiefung (130) der dritten Seite (128) angeordnet ist; und
einen dritten Ventilsteuermechanismus, der in der zylindrischen Vertiefung (154) der abgewinkelten siebten Seite (158) angeordnet ist.

3. Der Ventilblock nach Anspruch 1 oder das System nach Anspruch 2, bei dem die Öffnung (204) in der vierten Seite (138) des Gehäuses (114) über eine Verbindung (200) in Fluidverbindung mit einem Fluidstromauslass (202) steht.

4. Der Ventilblock oder das System nach Anspruch 3, wobei die Öffnung (166) auf der fünften Seite (140) über eine Reduzierleitung (189) in Fluidverbindung mit einem Gleitringdichtungsanschluss (187) steht und in Fluidverbindung mit der koaxialen Leitung (185) steht, die in Fluidverbindung mit der Öffnung (208) steht, die sich auf der fünften Seite (140) des Gehäuses (114) befindet.

5. Der Ventilblock oder das System nach Anspruch 4, wobei die Öffnung (208), die sich auf der fünften Seite (140) des Gehäuses (114) befindet, über eine Verbindung (168) in Fluidverbindung mit einem Behälter (170) steht.

6. Der Ventilblock nach Anspruch 1 oder das System nach Anspruch 2, wobei die Öffnung (206), die sich auf der zweiten Seite (126) des Gehäuses (114) befindet, in Fluidverbindung mit einer Spülgasquelle (159) steht.

7. Der Ventilblock nach Anspruch 1 oder das System nach Anspruch 2, wobei die T-Verbindung einen 90°-Winkel aufweist.

8. Der Ventilblock nach Anspruch 1 oder das System nach Anspruch 2, wobei die T-Verbindung einen Winkel von 30° bis 135° aufweist.

9. Ein Verfahren zum Durchführen eines Spülschritts in einem Ventilblock nach Anspruch 2, nachdem der Ventilblock einen Fluidströmungsschritt durchlaufen hat, wobei der Ventilblock in Fluidverbindung mit einem Behälter steht,
wobei die Öffnung (206), die sich auf der zweiten Seite (126) des Gehäuses (114) befindet, in Fluidverbindung mit einer Spülgasquelle (159) steht; und
wobei das Verfahren die folgenden Schritte umfasst:
Wechseln des Behälters;
Einrücken des zweiten Ventilsteuermechanismus, um die erste Öffnung (134) in der Oberfläche (132) der zylindrischen Vertiefung (130) in der dritten Seite (128) zu schließen und die zweite Öffnung (136) in der Oberfläche (132) der zylindrischen Vertiefung (130) in der dritten Seite (128) zu isolieren;
Lösen des ersten Ventilsteuermechanismus, um die erste Öffnung (122) in der Oberfläche (120) der zylindrischen Vertiefung (118) in der ersten Seite (116) zu öffnen und um die zweite Öffnung (124) in der Oberfläche (120) der zylindrischen Vertiefung (118) in der ersten Seite (116) zu öffnen;
Lösen des dritten Ventilsteuermechanismus, um die erste Öffnung (174) in der Oberfläche (184) der zylindrischen Vertiefung (154) in der abgewinkelten siebten Seite (158) zu öffnen und um die zweite Öffnung (176) in der Oberfläche (184) der zylindrischen Vertiefung (154) in der abgewinkelten siebten Seite (158) zu öffnen; und
Strömenlassen von Hochdruckspülgas durch die Öffnung (206), die sich auf der zweiten Seite (126) des Gehäuses (114) befindet, so dass das Spülgas durch die zweite Öffnung (176) in der Oberfläche (184) der zylindrischen Vertiefung (154) in der abgewinkelten siebten Seite (158) und dann durch die erste Öffnung (174) in der Oberfläche (184) der zylindrischen Vertiefung (154) in der abgewinkelten siebten Seite (158) strömt, um aus dem inneren koaxialen Abschnitt (183) der koaxialen Leitung auszutreten und zurück in den äußeren koaxialen Abschnitt (185) der koaxialen Leitung durch die erste Öffnung (122) in der Oberfläche (120) der zylindrischen Vertiefung (118) in der ersten Seite (116) und in die zweite Öffnung (124) in der Oberfläche (120) der zylindrischen Vertiefung (118) in der ersten Seite (116) zu der Entlüftungsöffnung (178), die sich auf der zweiten Seite (126) des Gehäuses (114) befindet, zu gelangen.

10. Das Verfahren nach Anspruch 9, wobei die Öffnung (204) in der vierten Seite (138) des Gehäuses (114) über eine Verbindung (200) in Fluidverbindung mit einem Fluidstromauslass (202) steht.

11. Das Verfahren nach Anspruch 10, bei dem die Öffnung (166) auf der fünften Seite (140) über eine Reduzierleitung (189) in Fluidverbindung mit einem Gleitringdichtungsanschluss (187) und in Fluidverbindung mit der koaxialen Leitung (185) steht, die in Fluidverbindung mit der auf der fünften Seite (140) des Gehäuses (114) angeordneten Öffnung (208) steht.

12. Das Verfahren nach Anspruch 11, bei dem die an der fünften Seite (140) des Gehäuses (114) befindliche Öffnung (208) über eine Verbindung (168) in Fluidverbindung mit einem Behälter (170) steht.

13. Das Verfahren nach Anspruch 9, bei dem die Öffnung (206), die sich auf der zweiten Seite (126) des Gehäuses (114) befindet, in Fluidverbindung mit einer Spülgasquelle (159) steht.

14. Das Verfahren nach Anspruch 9, wobei die T-Verbindung einen 90°-Winkel aufweist.

15. Das Verfahren nach Anspruch 9, wobei die T-Verbindung einen Winkel von 30° bis 135° aufweist.

## Revendications

1. Bloc à vannes comprenant :
un boîtier (114) ayant un premier côté (116) et un deuxième côté (126) opposé au premier côté (116), dans lequel le premier côté (116) comprend une dépression cylindrique (118) pour recevoir un mécanisme de régulation de vanne, dans lequel la dépression cylindrique (118) comprend une surface (120) et une première ouverture (122) et une seconde ouverture (124) dans la surface (120), chacune étant l'extrémité terminale d'un conduit, dans lequel la première ouverture est en communication fluidique avec un raccord en T (146) en communication fluidique avec un second conduit (148) ayant une première partie (150) et une seconde partie (152), dans lequel la seconde ouverture (124) est en communication fluidique avec une ouverture d'aération (178) située sur le deuxième côté (126) du boîtier (114) ;
un troisième côté (128) adjacent au premier côté (116) et un quatrième côté (138) opposé au troisième côté (128), dans lequel le troisième côté (128) comprend une dépression cylindrique (130) pour recevoir un mécanisme de régulation de vanne, dans lequel la dépression cylindrique (130) comprend une surface (132) et une première ouverture (134) et une seconde ouverture (136) dans la surface, chacune étant l'extrémité terminale d'un conduit, dans lequel la première ouverture (134) est en communication fluidique avec la première partie (150) du second conduit (148) et la seconde ouverture (136) est en communication fluidique avec une ouverture (204) située sur le quatrième côté (138) du boîtier (114) ;
un cinquième côté (140) et un sixième côté (142) opposé au cinquième côté (140), dans lequel la seconde partie (152) du second conduit (148) est en communication fluidique avec une ouverture (166) située sur le cinquième côté (140) du boîtier (114) par l'intermédiaire d'un conduit à travers une partie coudée (162) ; et
un septième côté incliné (158) adjacent au premier côté (116) et au quatrième côté (138), dans lequel le septième côté incliné (158) comprend une dépression cylindrique (154) pour recevoir un mécanisme de régulation de vanne, dans lequel la dépression cylindrique (154) comprend une surface (184) et une première ouverture (174) et une seconde ouverture (176) dans la surface (184), chacune d'entre elles étant des extrémités terminales de conduits,
**caractérisé en ce que**
ladite première ouverture (174) située sur le septième côté incliné (158) est en communication fluidique avec une ouverture (208) par l'intermédiaire d'une partie de conduit (194) à travers un coude (196) situé sur le cinquième côté (140) du boîtier (114), ladite seconde ouverture (176) située sur le septième côté incliné (158) est en communication fluidique avec une ouverture (206) située sur le deuxième côté (126) du boîtier (114) par l'intermédiaire d'un conduit (186) à travers un coude (190) et une partie de conduit (188).

2. Système comprenant :
un bloc à vannes selon la revendication 1, comprenant en outre :
un premier mécanisme de régulation de vanne situé dans la dépression cylindrique (118) du premier côté (116) ;
un deuxième mécanisme de régulation de vanne situé dans la dépression cylindrique (130) du troisième côté (128) ; et
un troisième mécanisme de régulation de vanne situé dans la dépression cylindrique (154) du septième côté incliné (158).

3. Bloc à vannes selon la revendication 1 ou système selon la revendication 2, dans lequel l'ouverture (204) dans le quatrième côté (138) du boîtier (114) est en communication fluidique avec une sortie d'écoulement de fluide (202) à travers une connexion (200).

4. Bloc à vannes ou système selon la revendication 3, dans lequel l'ouverture (166) sur le cinquième côté (140) est en communication fluidique avec un raccord à joint facial (187) à travers un conduit de réduction (189) et est en communication fluidique avec le conduit coaxial (185), qui est en communication fluidique avec l'ouverture (208) située sur le cinquième côté (140) du boîtier (114).

5. Bloc à vannes ou système selon la revendication 4, dans lequel l'ouverture (208) située sur le cinquième côté (140) du boîtier (114) est en communication fluidique avec un récipient (170) à travers une connexion (168) .

6. Bloc à vannes selon la revendication 1 ou système selon la revendication 2, dans lequel l'ouverture (206) située sur le deuxième côté (126) du boîtier (114) est en communication fluidique avec une source de gaz de purge (159).

7. Bloc à vannes selon la revendication 1 ou système selon la revendication 2, dans lequel le raccord en T comprend un angle de 90°.

8. Bloc à vannes selon la revendication 1 ou système selon la revendication 2, dans lequel le raccord en T comprend un angle de 30° à 135°.

9. Procédé d'exécution d'une étape de purge dans un bloc à vannes selon la revendication 2, après que le bloc à vannes a subi une étape d'écoulement de fluide, dans lequel le bloc à vannes est en communication fluidique avec un récipient, dans lequel l'ouverture (206) située sur le deuxième côté (126) du boîtier (114) est en communication fluidique avec une source de gaz de purge (159) ; et
le procédé comprenant les étapes suivantes :
le changement du récipient ;
l'engagement du deuxième mécanisme de régulation de vanne pour fermer la première ouverture (134) dans la surface (132) de la dépression cylindrique (130) dans le troisième côté (128) et pour isoler la seconde ouverture (136) dans la surface (132) de la dépression cylindrique (130) dans le troisième côté (128) ;
le désengagement du premier mécanisme de régulation de vanne pour ouvrir la première ouverture (122) dans la surface (120) de la dépression cylindrique (118) dans le premier côté (116) et pour ouvrir la seconde ouverture (124) dans la surface (120) de la dépression cylindrique (118) dans le premier côté (116) ;
le désengagement du troisième mécanisme de régulation de vanne pour ouvrir la première ouverture (174) dans la surface (184) de la dépression cylindrique (154) dans le septième côté incliné (158) et pour ouvrir la seconde ouverture (176) dans la surface (184) de la dépression cylindrique (154) dans le septième côté incliné (158) ; et
l'écoulement d'un gaz de purge à haute pression par l'intermédiaire de l'ouverture (206) située sur le deuxième côté (126) du boîtier (114) de sorte que le gaz de purge s'écoule par l'intermédiaire de la seconde ouverture (176) dans la surface (184) de la dépression cylindrique (154) dans le septième côté incliné (158) puis par l'intermédiaire de la première ouverture (174) dans la surface (184) de la dépression cylindrique (154) dans le septième côté incliné (158) pour sortir de la partie coaxiale intérieure (183) du conduit coaxial et remonter la partie coaxiale extérieure (185) du conduit coaxial par l'intermédiaire de la première ouverture (122) dans la surface (120) de la dépression cylindrique (118) dans le premier côté (116) et dans la seconde ouverture (124) dans la surface (120) de la dépression cylindrique (118) dans le premier côté (116) jusqu'à l'ouverture d'aération (178) située sur le deuxième côté (126) du boîtier (114).

10. Procédé selon la revendication 9, dans lequel l'ouverture (204) dans le quatrième côté (138) du boîtier (114) est en communication fluidique avec une sortie d'écoulement de fluide (202) à travers une connexion (200) .

11. Procédé selon la revendication 10, dans lequel l'ouverture (166) sur le cinquième côté (140) est en communication fluidique avec un raccord à joint facial (187) à travers un conduit de réduction (189) et est en communication fluidique avec le conduit coaxial (185), qui est en communication fluidique avec l'ouverture (208) située sur le cinquième côté (140) du boîtier (114).

12. Procédé selon la revendication 11, dans lequel l'ouverture (208) située sur le cinquième côté (140) du boîtier (114) est en communication fluidique avec un récipient (170) à travers une connexion (168).

13. Procédé selon la revendication 9, dans lequel l'ouverture (206) située sur le deuxième côté (126) du boîtier (114) est en communication fluidique avec une source de gaz de purge (159).

14. Procédé selon la revendication 9, dans lequel le raccord en T comprend un angle de 90°.

15. Procédé selon la revendication 9, dans lequel le raccord en T comprend un angle de 30° à 135°.
